# EUROPEAN PATENT SPECIFICATION

(11) **EP 3 068 516 B1**
(45) Date of publication and mention of the grant of the patent: **31.07.2019**
(21) Application number: 14841421.2
(22) Date of filing: 12.11.2014
(51) Int. Cl.: B01D 46/24, B01D 46/00, B01D 45/10

(54) **SYNTHETIC INJECTED HYDROPHILIC FILTER SYSTEM**
SYNTHETISCHES INJIZIERTES HYDROPHILES FILTERSYSTEM
SYSTÈME DE FILTRE HYDROPHILE INJECTÉ SYNTHÉTIQUE

(30) Priority: 13.11.2013 US 201361903549 P; 10.11.2014 US 201414537001
(43) Date of publication of application: 21.09.2016
(73) Proprietor: Dexwet International AG, 1220 Vienna (AT)
(72) Inventor: PETELN, Erich J., 2602 Blumau (AT)
(74) Representative: Gibler & Poth Patentanwälte KG
(86) International application number: PCT/IB2014/002996
(87) International publication number: WO 2015/071760

(56) References cited:
- EP-A1- 2 327 466
- US-A1- 2002 104 437
- US-A1- 2008 314 248

## Description

### BACKGROUND

This application generally relates to a system, apparatus, and method for removing particulates from an airflow using a filter module. Various machines spanning a variety of industries, e.g., computers, radiators, etc., often include airflow that passes into, through, and/or out of the machines. The airflow often contains particulates that are either generated by the machine or enter the airflow from the machine's surrounding environment. These particulates may impair the machine's functionality, and so it is therefore beneficial to remove the particulates from the airflow using a filter module.

By making the modules removable, replacement becomes quicker and easier. U.S. Patent 8,343,247 shows a filter housing with an intake opening and an outlet opening for channelling machine exhaust through, at least one mounting element for mounting the filter module on a machine, and a filter assembly arranged in the filter housing and comprised of at least two filter groups, arranged in tandem in the direction of flow and comprised of rod-shaped filter elements with a filter medium, said elements being arranged parallel to one another at a constant center-to-center distance and with their longitudinal axis largely crosswise to the direction of flow, wherein the filter elements of two adjacent filter groups are parallel to one another, and are arranged offset in relation to one another, crosswise to their longitudinal axes and to the direction of flow. A similar filter is disclosed in EP2327466.

From U.S. Patent No. 6,726,749 a filter device of this type designed for removing air-polluting materials from the exhaust air from machines, especially office machines, is known. This device has a plurality of filter sticks in a filter housing, which sticks are supplied with fluid from a fluid container, and a fastening device for mounting the filter housing on a machine, wherein the filter rods are positioned in the exhaust air flow. As can be seen in FIG. 7 of U.S. Patent No. 6.726,749, in one embodiment the filter rods are arranged in rows, and the rows are offset in relation to one another. The air-polluting materials are absorbed as they pass by the filter rods wetted with the fluid, and are thereby removed from the exhaust air flow.

One disadvantage of these systems is that the filter rods are difficult and expensive to manufacturer and that maintenance or replacement of the filter rods is correspondingly laborious and tedious. Also disadvantageous is that the fluid is consumed when the filter device is in use, and the fluid container must be regularly refilled to extend its useful period, to maintain the wetting of the filter rods. This filling process requires a great deal of caution or additional accessories to prevent contamination. Independent of the need to repeatedly supply the filter with fluid, if the filter rods are badly soiled following an extended period of use or due to severely polluted machine exhaust, a reconditioning cleaning or replacement of the filter rods or of the entire filter device may be necessary, which, because of the individually attached filter rods, entails high costs from increased handling expenses or a complete replacement.

Further, the use of woven filter materials has proven to be disadvantageous in that they are difficult or impossible to clean and reuse and become clogged relatively quickly. The present disclosure provides a filter device that is cheaper to manufacture, use and replace.

### SUMMARY

The following summary is intended to assist the reader in understanding the full disclosure and the claims. The claims define the scope of the invention, not this summary.

According to an aspect of one or more exemplary embodiments, there is provided a filter system for removing particulates from a flow of air in a variety of applications, including machine exhaust, filtering air flow in a room using a radiator, and internal machine air flow in, for example, slot machines, automatic teller machines (ATMs), and automobiles. The filter system may include at least first and second parallel filter units disposed adjacent each other, each such filter units having a longitudinal axis and a plurality of spaced-apart filter tubes defining a gap there between. The filter units may be laterally offset relative to each other so that the gaps in said first unit are adjacent filter tubes in said second unit. The filter tubes may be formed of a hydrophilic material capable of retaining a liquid attractant, and may be covered at least in part, by an attractant formulated to entrain particulates. The filter tubes may include a plurality of apertures over its surfaces to thereby increase the surface area available for coverage by said attractant.

Alternatively, the system has only one unit or even one tube. In addition, the apertures of the filter tubes may be rectangular and/or the filter tubes may be cylindrical. The first and second units may be joined together to form an array. The entire filter system may be a unitary element formed from a single shot injection, using, for example and without limitation, a synthetic material such as Polyamide 6 ("PA6") or similar, by injection molding. Producing the components of the filter unit using a plastic injection molding process may be economical especially when large piece numbers are required, and may achieve consistently high work piece precision levels and quality. In selecting the plastic to be used, the temperature of the exhaust air may be taken into account so that during use, no impermissible shape changes in the components of the filter module occur as a result of the exhaust air temperatures.

The filter tubes of the filter system may be hollow and include a magnetic strip element. The filter tubes may be hollow and include a connection for providing a vacuum to at least some of the tubes to withdraw air therefrom. The filter tubes may be hollow and include a connection for providing a positive air flow to at least some of the tubes to purge tubes of particulates and clear the apertures. A surface area of the filter tubes in a plane perpendicular to the direction of flow may have a larger surface area than the free passage surface area between the filter tubes in a plane perpendicular to the direction of flow of air.

The attractant may be a fluid selected from the group consisting of glycerin, silicone oil, essential oil, paraffin oil, and latex emulsion. The attractant may also include a substance selected from the group consisting of an antibacterial, antiviral, antimycotic, and fungicidal substance. The attractant does not require any fluid container, and may have a molecular structure that allows the attractant to resist drying out for substantial periods of time. The filter tube may also include a surface treatment selected from the group consisting of an antibacterial, antiviral, antimycotic and fungicidal surface. One or more of the filter tubes may have a cross- sectional shape selected from the group consisting of rectangle, square, triangle, circle, star and oval.

The filter system may also include a connector disposed on one of the first and second filter units and a receiver on the other of the first and second filter units for connecting the filter units. For example, the connector and receiver may include magnets that connect the first and second filter units. The magnets may also connect the first and second filter units to a machine or radiator for performing filtering. The magnets may also be used to connect the first and second filter units in various configurations to accommodate various lengths and sizes.

According to another aspect of one or more exemplary embodiments, there is provided a method of making an air filter devoid of woven filter material comprising any or all of the following steps, in any order:
(a) forming a first filter unit using one or more hydrophilic materials, such that the first filter unit includes a plurality of tubes that may have a plurality of apertures on the surface of said tubes, said tubes being formed in a side-by-side, generally parallel relationship with gaps between said tubes;
(b) forming a second filter unit using one or more hydrophilic materials, such that the second filter unit includes a plurality of tubes that may have a plurality of apertures on the surface of said tubes, said tubes being formed in a side by side generally parallel relationship with gaps between said tubes;
(c) disposing the first and second filter units adjacent to each other with said tubes offset between units so that a tube in the first unit is adjacent a gap in the second unit
(d) coating at least a portion of said tubes in a liquid particulate attractant, said attractant having an affinity to said hydrophilic materials.

The method may also include periodically applying a vacuum to ends of at least some of said tubes to attract particulates thereto via said apertures. The method may also include periodically applying a positive pressure to ends of at least some of said tubes to purge particulates from said apertures.

According to yet another aspect of one or more exemplary embodiments, there is provided a filtration tube that may include a hollow tube that may have a plurality of apertures therethrough to increase its surface area; the tube being formed to have a hydrophilic surface to receive and retain an attractant fluid. The tube may also be covered at least in part, by an attractant fluid capable of entraining particulates.

### BRIEF DESCRIPTION OF THE DRAWINGS

Figure 1 is a front perspective view of a filter unit having a plurality of filter tubes, according to an exemplary embodiment.
Figure 2 is front plan view of one face of the filter unit, according to an exemplary embodiment.
Figure 3 is a top plan schematic view of the filter unit, according to an exemplary embodiment.
Figure 4 is a close up rear perspective view with portions broken away, according to an exemplary embodiment.
Figure 5 is a close up front perspective view with portions broken away, according to an exemplary embodiment.
Figure 6 is a side perspective view of the rear face and end of a filter unit, according to an exemplary embodiment.
Figure 7 is a front elevated perspective view of a pair of filter units joined together, according to an exemplary embodiment.

### DETAILED DESCRIPTION OF EXEMPLARY EMBODIMENTS

By way of introduction, it is noted that in the differently described embodiments, equivalent parts are designated by the same reference symbols or component descriptions, wherein the disclosures contained in the entire description can be logically transferred to equivalent parts having the same reference symbols or the same component descriptions. Also, positional information selected in the description, such as above, below, to the side, etc., refers to the immediately described or illustrated figure, and, in the case of a position change, can be logically transferred to the new position. Furthermore, individual characterizing features or combinations of features from the illustrated and described exemplary embodiments can also represent solutions that are independent, inventive or specified in the inventive concepts.

The filtration system according to one or more of the exemplary embodiments described herein may be used for many environments, most particularly, office machines, computer displays, or the like which either generate particulates or are in dirty environments. The following additional areas of application of the filter module of the exemplary embodiments are listed as examples of the multitude of potential applications: installation in or on the outlet of exhaust pipes or chimneys, use as a back-up filter or supplementary filter for vacuum cleaners, use in motor vehicles, for example as a supplementary air filter or as a filter for the air in the interior of the vehicle, for example as a pollen filter, as an industrial filter in power plants, filters for indoor air systems, such as air conditioners or ventilation systems. Express reference is made in this connection to the possible use as a filter for supplied air, ambient air, or intake air for the widest range of machine types.

Exemplary embodiments will now be described with reference to the attached drawings. It is understood that the filter unit may be used with a ventilator/fan (not shown in Figures) which will draw air through the filter unit, however the filter unit does not require a fan or ventilator. In addition, the mounting units, which mount the filter unit to the machine producing the exhaust, are not described herein but can be any mounting mechanism known in the art or by those described in the patents discussed above.

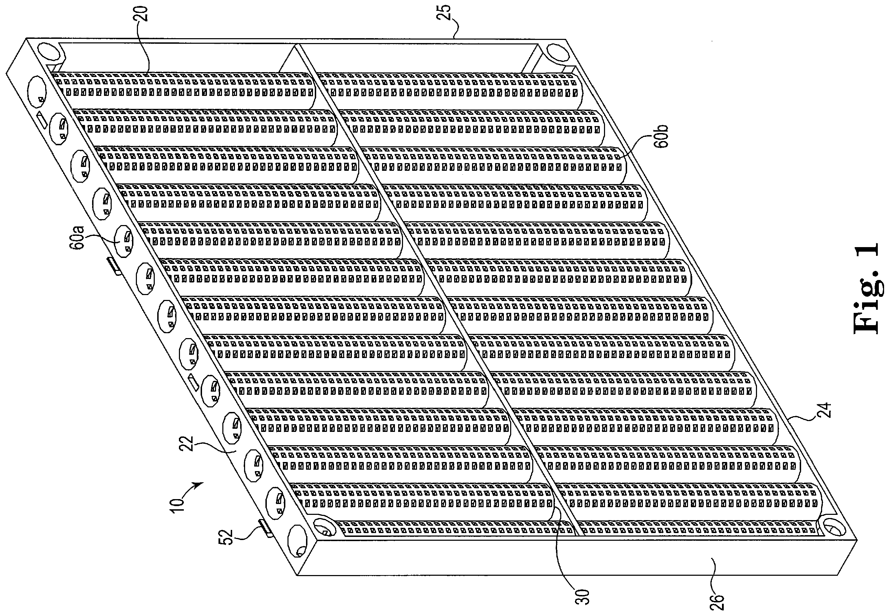

FIG. 1 is a front perspective view of a filter unit according to an exemplary embodiment. Referring to FIG. 1, filter unit 10 includes a top plate 22 and a bottom plate 24, two side plates 25 and 26, and a plurality of filter tubes 20 which are disposed between top plate 22 and bottom plate 24. Filter tubes 20 each may have open ends 60a and 60b at opposite ends of the filter tube 20. Filter unit 10 may also include a junction clip 52 that is used to connect filter unit 10 to other filter units, as will described below. Filter unit 10 may also include intermediary cross member 30. Filter tubes 20 may pass through or be supported by intermediary cross member 30. Filter unit 10 may be produced as a single injection molded unit with filter tubes 20, top and bottom walls 22, 24, sidewalls 25, 26, and optionally middle support 30 formed in a single shot. This creates a unitary device in one step.

Filter tubes 20 may be formed of a substantially rigid material so that the filter tubes 20 themselves are self-supporting. In addition, filter tubes 20 may be constructed using a non-woven material that may not independently filter air, but that does filter air in combination with an attractant that is applied to the filter tubes 20, as will be discussed below. The filter tubes 20 may be constructed of non-absorbent, PA6 or similar material, but the filter tube 20 according to an exemplary embodiment does not absorb any liquid, including the attractant discussed further below. This makes it possible to clean the tube by washing and recoating with attractant. More specifically, filter unit 10 may be formed using PA6 made by many companies such as BASF®. One version, Polyamide B: PA 6 (unreinforced) from BASF® is quoted as a tough and strong material affording parts with good damping characteristics and high shock resistance even in the dry state and at low temperatures. Ultramid PA6 is distinguished by particularly high impact resistance and ease of processing. The characteristic of PA6 which is of particular interest to the present disclosure is that it is hydrophilic with respect to oil so that it will attract and retain oil without simply running off. Other materials with hydrophilic properties may also be used in the filter unit according to the exemplary embodiment.

The filter tubes 20 may be covered in an oil or other attractant or wetting agent selected from the group of fluids such as glycerin, silicone oil, essential oil, paraffin oil, and/or latex emulsion. According to an exemplary embodiment, the attractant may be a silicone oil type AK 2000 from Wacker Chemie AG, but such an attractant is merely exemplary and can be replaced by other attractants. The air-polluting materials in the machine exhaust, such as dust, fine dust, ultrafine particles pollen, spores, bacteria, other aerosols with solid or liquid particles, and in the case of an office machine especially toner dust and/or paper wear debris, can be effectively bonded mechanically when they come in contact with the wetted filter medium. Gaseous pollutants, such as ozone, benzole, phenol, carbon dioxide, formaldehyde or unpleasant odors can also be chemically absorbed and/or neutralized by coming into contact with the fluid. Further, according to another exemplary embodiment of the filter unit, it may be advantageous to equip the filter unit with an antibacterial surface. This can be accomplished, for example, with a coating or impregnation with silver, especially nanoscale silver, or a silver compound. Moreover, to remove ferromagnetic particles, such as iron wear debris, from the machine, one or more exemplary embodiments provide that one or more filter units may be equipped with a magnetic element or a magnetic component, which may be a permanent magnet or an electromagnet.

The filter unit according to an exemplary embodiment may result in low vapor pressure and correspondingly low evaporation rate, which produces a long service life. The viscosity of these fluids is further favorable to an even distribution in the filter tube via the capillary and hydrophilic effect that occurs with the wetting of the filter tube. With a correspondingly adjusted high level of viscosity and surface tension, a direct wetting of the filter tube is also possible, whereby a filter medium is effectively formed by the fluid on the tube.

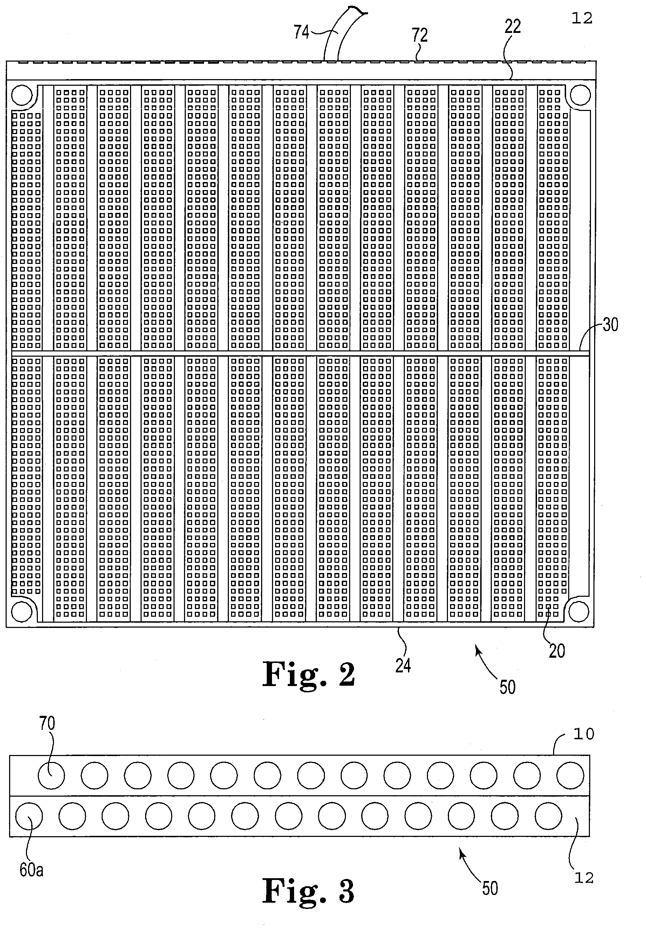

FIG. 2 is front plan view of one face of a filter unit according to an exemplary embodiment. FIG. 3 is a top plan schematic view of the filter unit, according to an exemplary embodiment. Referring to FIGs. 2 and 3, the filter unit according to the exemplary embodiment may include first filtering unit 10 and second filtering unit 12 disposed directly adjacent to each other. The exhaust air is filtered through the filter units 10 and 12 with each filter unit including multiple rod-shaped filter tubes 20, which are arranged with their longitudinal axes largely perpendicular to the direction of air flow 50, and which may be parallel to one another at a consistent center-to-center distance. The filter tubes 20 of the two adjacent filter units 10, 12 may also be parallel to one another. Filter tubes 20 may be connected at their open ends 60a, 60b to a source of air or vacuum 74 by direct connection to the tube ends or by a manifold 72 and a single connection to each filter tube 20. Connecting a vacuum to the filter tubes may help draw particulates to the tubes to further enhance filtering.

The individual filter tubes 20 may be cylindrically shaped with a round cross-section. As an alternative to this cylindrical configuration, other shapes such as square, triangular, star-shaped, circular, or oval cross-sections, are also possible. The rectangular, triangular or round, especially circular, embodiment of the filter elements may be easier to produce in terms of manufacturing technology. In addition, the rectangular and circular cylindrical forms may favor a symmetrical configuration of the filter inserts. The star-shaped cross-section, in contrast, offers a high value in the ratio of surface to volume of the filter element, allowing a large filter surface to be accommodated in a relatively small space. The cross-sectional shape can also be used to influence the flow of exhaust air through the filter units, for example to eddy the flow through cross-sections that are unfavorable to flow, such as rectangular cross- sections, and to intensify contact of the exhaust air with the filter tubes. The cross-sectional shape may be used to calm the flow through cross-sections that are favorable to flow, such as triangular cross-sections, if the exhaust air flow from the machine is strong and turbulent and therefore potentially disruptive.

According to the exemplary embodiment shown in FIGs. 2 and 3, the filter tubes 20 from two filter units 10, 12 are not arranged in tandem in a straight line viewed in the direction of air flow 50, but are offset, parallel to one another, perpendicular to the direction of air flow 50. In the exemplary embodiment shown in FIG. 3, two structurally uniform filter units 10, 12 are arranged offset in relation to one another by half the center-to-center distance, whereby tubes are situated in tandem are also offset in relation to one another, and in each case, a filter tube 20 of filter unit 10 is centered behind a gap formed by two adjacent filter tubes 20 of adjacent filter unit 12. If the width of the filter tubes 20 is greater than half the center-to-center distance, as in the illustrated example, it is essentially impossible for particulates to pass through the filter array in a straight line, which forces a sharp redirection of the exhaust air flowing through, thereby increasing the filtering effect. According to an exemplary embodiment, the center-to-center spacing may not be uniform, and the width of the tube may not be greater than half of the center-to-center distance.

With further reference to FIGs. 2 and 3, to attract ferrous metal particulates, a magnetic strip 70 may be located within the filter tubes 20, or the tubes themselves may be a constructed using a magnetic material that is coated with a hydrophilic material. The filter tubes 20 may have a surface area in a plane perpendicular to the direction of flow which has a larger surface area than the free passage surface area between the filter tubes in a plane perpendicular to the direction of flow of air.

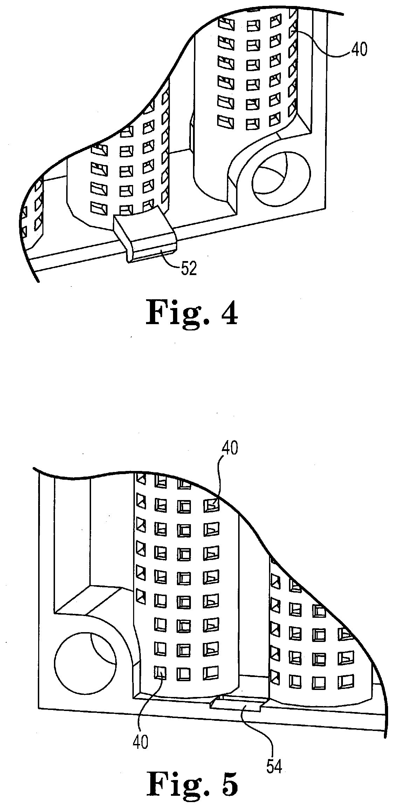

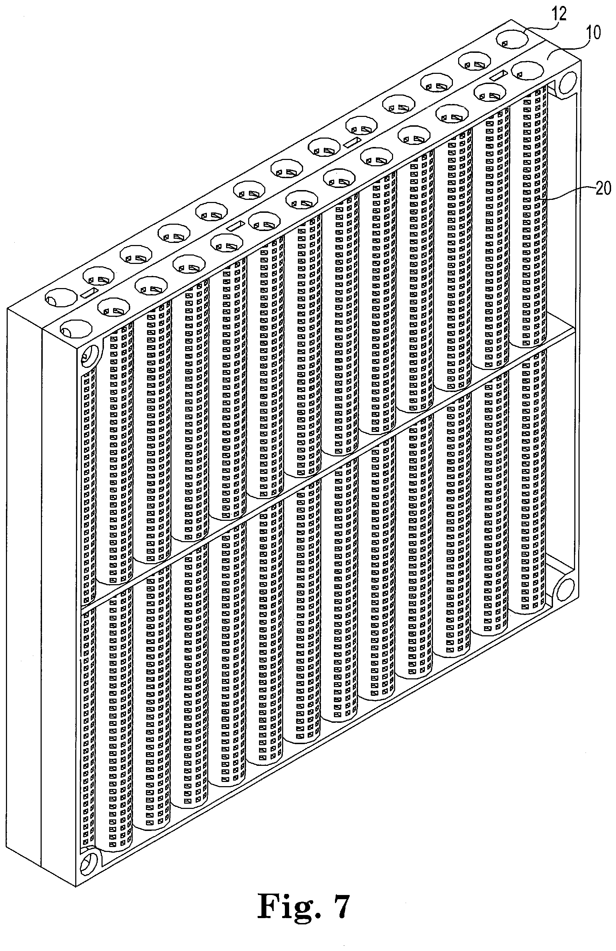

FIG. 4 is a close up rear perspective view with portions broken away of a filtering unit according to an exemplary embodiment. FIG. 5 is a close up front perspective view with portions broken away of a filtering unit according to an exemplary embodiment. Referring to FIGs. 4 and 5, the filter unit according to an exemplary embodiment may include junction clips 52 and like engagement recesses 54 so that two, three or more units can be joined back to back as shown in FIGs. 3 and 7. In addition, the filter unit may include filter tubes 20 having a tubular shape, but the filter tubes 20 may also be oval, multi-sided, or other shape. Each filter tube 20 m a y also include a plurality of small apertures 40 which increase the effective surface area of the filter tube 20 substantially and provide a passage for air.

The apertures 40 may be rectangular or square, but may be other shapes including round, oval or irregular to increase the surface area further. For example, and without limitation, for a filter unit having dimensions of 15 cm x 15 cm, aperture 40 may be approximately 0.1 mm to 0.5 mm (and any increment thereof in 0.01 mm) in diameter or diagonal measurement.

In the filter unit according to an exemplary embodiment, the attractant (the word oil will be used as a generic term for all possible attractants) combined with the hydrophilic properties of the tube material become the filter medium without the need for woven material. By dramatically increasing the surface area of the tube, by creating apertures, the filter media for a single tube is substantially greater than the mere tube without apertures. Thus the loading capacity of the tube is also substantially greater. In addition, when a vacuum is connected to the filter tubes, as shown in FIG. 2, particulates are drawn to the filter tubes 20 by lowering the pressure therein at the apertures 40. The withdrawn air can be recirculated or expelled.

As particulates pass through the apertures 40, they become entrapped by the oil/attractant as they are required to make the directional turn up the hollow filter tube 20. As the filter tubes 2 0 become loaded with particulates or the apertures 40 become blocked, the amount of filtration will eventually reach a level which is too low to be effective. At that point, a pressure differential tester that measures pressure from front to back of the filter unit(s) will reach a predetermined level indicating that the filter should be changed, cleaned or purged. Because the filter media is an attractant, it can be removed by washing the unit in a detergent and the unit can be re-oiled. As a result of the construction employed in the exemplary embodiments, it is possible to entrain substantial amounts of particulates without the need for woven filter materials. In addition, a pulse-width modulation (PWM) fan may be used to purge the filter unit of particulates. If the filter unit becomes overly saturated with particulates, the speed of the PWM fan may be increased in order to purge the particulates. The saturation level may be monitored so that the speed of the PWM fan may be decreased once the particulate level has reached an acceptable level.

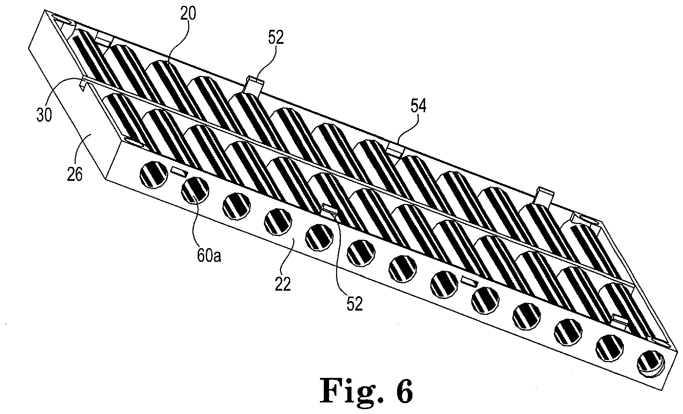

Figure 6 is a side perspective view of the rear face and end of a filter unit, according to an exemplary embodiment. Referring to FIG. 6, the filter unit according to the exemplary embodiment may have various shapes. For example, the filter unit may be rectangular with the length of the top plate 22 substantially greater than the length of side plate 26. By contrast, the filter unit shown in FIG. 1 includes top plate 22, bottom plate 24, and side plates 25, 26 that are roughly equivalent in size. As also shown in FIG. 6, the filter unit may include multiple junction clips 52 and engagement recesses 54 to facilitate joining multiple filter units together to form a filter array.

Figure 7 is a front elevated perspective view of a pair of filter units joined together, according to an exemplary embodiment. Referring to FIG. 7, two filter units 10, 12 may be configured back to back. Filter tubes 20 of first filter unit 10 may be laterally offset with respect to filter tubes 20 of second filter unit 12 so as to increase the likelihood that air engages at least one of the units. In this configuration, gaps between the filter tubes 20 in the first filter unit 10 are blocked by filter tubes 20 of the second filter unit 12 when viewed in the direction in which air would flow through the filter. Since particulates are heavier than air, they are less likely to be able to make the required arc between adjacent tubes in the two units and are likely to engage one of the tubes by centrifugal force.

According to a further exemplary embodiment, it may also be advantageous to orient the longitudinal axes of the tubes to the direction of flow, in order to create large active surfaces and a sharp redirection of the exhaust air. With this arrangement of the filter elements, the filter module can be configured to be short, viewed in the direction of flow, with multiple filter inserts in tandem.

According to an alternative exemplary embodiment, a reverse flow of purging air can be introduced into the tubes to clear particulates out of the holes. This is preferably done when the ventilator/air flow device is turned off so that particulates have an opportunity to be entrained on other parts of the unit which are also covered in oil, or if the unit is sitting in a reservoir of oil, or the base frame of the unit is covered in oil, the particulates will merely fall down to such oiled surface and be entrained when the ventilator is restarted.

In addition to the filter unit described above, the disclosure also provides a method of manufacturing a filtration unit according to an exemplary embodiment that may include molding a plurality of adjacent hydrophilic tubes into an array of tubes that area adjacent but spaced apart from each other, covering the tubes with an attractant, and passing exhaust air through the tube array so that air encounters the tubes.

The method according to the exemplary embodiment may also include making an air filter devoid of woven filter material with one or more of the following:
(a) forming a filter unit having a plurality of porous tubes using hydrophilic materials, wherein the tubes being formed in a side by side generally parallel relationship with gaps between the tubes;
(b) forming a second filter unit having a plurality of porous tubes using hydrophilic materials, wherein the tubes are formed in a side by side generally parallel relationship with gaps between the tubes;
(c) disposing the filter units adjacent to each other with said tubes offset between units so that a tube in the first unit is adjacent a gap between tubes in the second unit;
(d) coating at least a portion of the tubes in a liquid particulate attractant, wherein the attractant has an affinity to the hydrophilic materials.

To increase efficiency, the method may include disposing a plurality of tube arrays/units back-to-back but offset so that spaces between tubes in one unit are adjacent tubes in the adjacent unit so that exhaust air is more likely to engage one or more tubes when traveling orthogonally to the length of the tube.

To further increase efficiency, the method may include forming a plurality of holes in each tube to increase the surface area which can receive the attractant. To even further increase efficiency, the method may include applying a vacuum to the end of the tubes to draw particulates to the holes. Also to further increase efficiency, the method may include periodically providing a positive pressure flow into the ends of the tubes to purge the holes of particulates, particularly when the ventilator is not running so that particulates may be entrained on other surfaces in the gravitational path where further attractant is located.

## Claims

1. A filter system for removing particulates from a flow of an air exhaust system comprising:
a first filter unit (10) comprising a first plurality of filter tubes (20) having a first longitudinal axis, wherein the filter tubes (20) of the first plurality of filter tubes (20) are spaced to create one or more gaps between the filter tubes (20) of the first plurality of filter tubes (20);
wherein at least one of the filter tubes (20) of the first plurality of filter tubes (20) is formed of a hydrophilic material capable of retaining a liquid attractant; and
wherein the first plurality of filter tubes (20) is covered at least in part by an attractant formulated to entrain particulates;
**characterized in that** said at least one of the first plurality of filter tubes (20) is formed of a non-absorbent material and does not absorb any liquid, so that the filter tube (20) can be cleaned by washing and recoated with attractant.

2. The filter system according to claim 1, further comprising:
a second filter unit (12) comprising a second plurality of filter tubes (20) having a second longitudinal axis, wherein the filter tubes (20) of the second plurality of filter tubes (20) are spaced to create one or more gaps between the filter tubes (20) of the second plurality of filter tubes (20);
wherein the second filter unit (12) is disposed adjacent to the first filter unit (10); and
wherein the first plurality of filter tubes (20) are laterally offset with respect to the second plurality of filter tubes (20) such that at least one gap between filter tubes (20) in the first plurality of filter tubes (20) is adjacent to a filter tube (20) of the second plurality of filter tubes (20).

3. The filter system according to claim 1 or 2, wherein the at least one of the first plurality of filter tubes (20) comprises a plurality of apertures (40) on its surface to thereby increase the surface area available for coverage by the attractant.

4. The filter system according to claim 2 or 3, wherein the first and second filter units (10,12) are joined together to form a filter array.

5. The filter system according to any one of claims 1 to 4, wherein the first filter unit (10) is produced as a single injection molded unit.

6. The filter system according to any one of claims 1 to 5, wherein at least one of the first plurality of filter tubes (20) is hollow and includes a connection for providing a vacuum to withdraw air therefrom or for providing a positive air flow to at least one of the first plurality of filter tubes (20) to purge the at least one filter tube (20) of particulates.

7. The filter system according to any one of claims 1 to 6, wherein a surface area of one filter tube (20) of the first plurality of filter tubes (20) in a plane perpendicular to a direction of airflow (50) through the filter unit (10) is greater than a surface area of a gap between two filter tubes (20) of the first plurality of filter tubes (20) in a plane perpendicular to the direction of airflow (50) through the filter.

8. The filter system according to any one of claims 2 to 7, further comprising:
a connector disposed on the first filter unit (10); and
a receiver disposed on the second filter unit (12);
wherein the connector and the receiver are configured to interconnect to join the first filter unit (10) and the second filter unit.

9. The filter system according to any one of claims 1 to 8, wherein at least one of the first plurality of filter tubes (20) is formed of a substantially rigid material.

10. The filter system according to any one of claims 2 to 9, wherein said first and second pluralities of filter tubes (20) are laterally offset relative to each other so that gaps between the filter tubes (20) of the first plurality of filter tubes (20) are blocked by filter tubes (20) of the second plurality of filter tubes (20) when viewed in a direction in which air flows (50) through the filter system.

11. A method of making an air filter system, the method comprising:
forming a first filter unit (10) using a hydrophilic non-absorbent material, said first filter unit (10) comprising of a first plurality of filter tubes (20) configured in a side-by-side, generally parallel relationship with gaps between said filter tubes (20) of said first plurality of filter tubes (20); and
coating at least a portion of said first plurality of filter tubes (20) in a liquid particulate attractant, said attractant having an affinity to said hydrophilic material;
wherein said hydrophilic material is capable of retaining said liquid particulate attractant;
wherein the filter tubes (20) do not absorb any liquid, so that the filter tube (20) can be cleaned by washing and recoated with attractant.

12. The method of claim 11, further comprising:
forming a second filter unit (12) using a hydrophilic material, said second filter unit (12) comprising a second plurality of filter tubes (20) configured in a side-by-side, generally parallel relationship with gaps between said filter tubes (20) of said second plurality of filter tubes (20); and
disposing the second filter unit (12) adjacent to the first filter unit (10) such that the first plurality of filter tubes (20) are laterally offset with respect to the second plurality of filter tubes (20) such that at least one gap between filter tubes (20) in the first plurality of filter tubes (20) is adjacent to a filter tube (20) of the second plurality of filter tubes (20).

13. The method of claim 11 or 12, wherein forming the first filter unit (10) comprises forming a plurality of apertures (40) on a surface of at least one filter tube (20) of the first plurality of filter tubes (20).

14. The method of claim 13 further comprising applying a vacuum to an end (60a, 60b) of at least one of the first plurality of filter tubes (20) to attract particulates thereto via said plurality of apertures (40), or
applying a positive pressure to the end (60a, 60b) of at least one of the first plurality of filter tubes (20) to purge particulates from said plurality of apertures (40).

15. The method according to any one of claims 11 to 14, wherein the first filter unit (10) is produced as a single injection molded unit.

## Patentansprüche

1. Filtersystem zum Entfernen von Partikeln aus einem Strom eines Abluftsystems, umfassend:
eine erste Filtereinheit (10) mit einer ersten Vielzahl von Filterrohren (20), die eine erste Längsachse aufweist, wobei die Filterrohre (20) der ersten Vielzahl von Filterrohren (20) voneinander beabstandet sind, um einen oder mehrere Spalte zwischen den Filterrohren (20) der ersten Vielzahl von Filterrohren (20) zu erzeugen;
wobei wenigstens eines der Filterrohre (20) der ersten Vielzahl von Filterrohren (20) aus einem hydrophilen Material gebildet ist, das in der Lage ist, ein flüssiges Anziehmittel zurückzuhalten, und
wobei die erste Vielzahl von Filterrohren (20) wenigstens teilweise mit einem Anziehmittel bedeckt ist, das dazu formuliert ist, Partikel mitzunehmen;
**dadurch gekennzeichnet, dass** wenigstens eines der ersten Vielzahl von Filterrohren (20) aus einem nicht-absorbierenden Material gebildet ist und keine Flüssigkeit absorbiert, so dass das Filterrohr (20) durch Waschen gereinigt und erneut mit Anziehmittel beschichtet werden kann.

2. Filtersystem nach Anspruch 1, ferner umfassend:
eine zweite Filtereinheit (12) mit einer zweiten Vielzahl von Filterrohren (20), die eine zweite Längsachse aufweist, wobei die Filterrohre (20) der zweiten Vielzahl von Filterrohren (20) voneinander beabstandet sind, um einen oder mehrere Spalte zwischen den Filterrohren (20) der zweiten Vielzahl von Filterrohren (20) zu erzeugen;
wobei die zweite Filtereinheit (12) benachbart der ersten Filtereinheit (10) angeordnet ist, und
wobei die erste Vielzahl von Filterrohren (20) bezüglich der zweiten Vielzahl von Filterrohren (20) seitlich versetzt ist, so dass wenigstens ein Spalt zwischen Filterrohren (20) in der ersten Vielzahl von Filterrohren (20) benachbart einem Filterrohr (20) der zweiten Vielzahl von Filterrohren (20) angeordnet ist.

3. Filtersystem nach Anspruch 1 oder 2, wobei das wenigstens eine der ersten Vielzahl von Filterrohren (20) eine Vielzahl von Öffnungen (40) an seiner Oberfläche umfasst, um dadurch die für die Beschichtung mit dem Anziehmittel verfügbare Oberfläche zu vergrößern.

4. Filtersystem nach Anspruch 2 oder 3, wobei die ersten und zweiten Filtereinheiten (10,12) miteinander verbunden sind, um eine Filteranordnung zu bilden.

5. Filtersystem nach einem der Ansprüche 1 bis 4, wobei die erste Filtereinheit (10) als eine einzige spritzgegossene Einheit hergestellt wird.

6. Filtersystem nach einem der Ansprüche 1 bis 5, wobei wenigstens eines der ersten Vielzahl von Filterrohren (20) hohl ist und eine Verbindung zum Bereitstellen eines Vakuums zum Abziehen von Luft aus diesem oder zum Bereitstellen eines positiven Luftstroms an wenigstens eines der ersten Vielzahl von Filterrohren (20), um das wenigstens eine Filterrohr (20) von Partikeln zu reinigen, umfasst.

7. Filtersystem nach einem der Ansprüche 1 bis 6, wobei eine Oberfläche eines Filterrohrs (20) der ersten Vielzahl von Filterrohren (20) in einer Ebene senkrecht zu einer Luftstromrichtung (50) durch die Filtereinheit (10) größer als eine Oberfläche eines Spaltes zwischen zwei Filterrohren (20) der ersten Vielzahl von Filterrohren (20) in einer Ebene senkrecht zur Luftstromrichtung (50) durch den Filter ist.

8. Filtersystem nach einem der Ansprüche 2 bis 7, ferner umfassend:
einen Anschluss, der an der ersten Filtereinheit (10) angeordnet ist, und
ein Aufnahmeteil, das an der ersten Filtereinheit (12) angeordnet ist,
wobei der Anschluss und das Aufnahmeteil dazu eingerichtet sind, miteinander verbunden zu werden, um die erste Filtereinheit (10) und die zweite Filtereinheit zusammenzufügen.

9. Filtersystem nach einem der Ansprüche 1 bis 8, wobei wenigstens eines der ersten Vielzahl von Filterrohren (20) aus einem im Wesentlichen starren Material gebildet ist.

10. Filtersystem nach einem der Ansprüche 2 bis 9, wobei die ersten und zweiten Vielzahlen von Filterrohren (20) relativ zueinander seitlich so versetzt sind, dass Spalte zwischen den Filterrohren (20) der ersten Vielzahl von Filterrohren (20), in einer Luftstromrichtung (50) durch das Filtersystem gesehen, durch Filterrohre (20) der zweiten Vielzahl von Filterrohren (20) blockiert werden.

11. Verfahren zum Herstellen eines Luftfiltersystems, wobei das Verfahren die Schritte umfasst:
Bilden einer ersten Filtereinheit (10) aus einem hydrophilen, nicht-absorbierenden Material, wobei die erste Filtereinheit (10) eine erste Vielzahl von Filterrohren (20) umfasst, die in einer nebeneinander angeordneten, allgemein parallelen Beziehung, mit Spalten zwischen den Filterrohren (20) der ersten Vielzahl von Filterrohren (20), angeordnet sind, und
wenigstens teilweises Beschichten der ersten Vielzahl von Filterrohren (20) mit einem flüssigen Partikel-Anziehmittel, wobei das Anziehmittel eine Affinität gegenüber dem hydrophilen Material aufweist,
wobei das hydrophile Material in der Lage ist, das flüssige Partikel-Anziehmittel zurückzuhalten,
wobei die Filterrohre (20) keine Flüssigkeit absorbieren, so dass das Filterrohr (20) durch Waschen gereinigt und erneut mit Anziehmittel beschichtet werden kann.

12. Verfahren nach Anspruch 11, ferner umfassend die Schritte:
Bilden einer zweiten Filtereinheit (12) aus einem hydrophilen Material, wobei die zweite Filtereinheit (12) eine zweite Vielzahl von Filterrohren (20) umfasst, die in einer nebeneinander angeordneten, allgemein parallelen Beziehung, mit Spalten zwischen den Filterrohren (20) der zweiten Vielzahl von Filterrohren (20), angeordnet sind, und
Anordnen der zweiten Filtereinheit (12) benachbart der ersten Filtereinheit (10), so dass die erste Vielzahl von Filterrohren (20) bezüglich der zweiten Vielzahl von Filterrohren (20) seitlich versetzt ist, so dass wenigstens ein Spalt zwischen Filterrohren (20) in der ersten Vielzahl von Filterrohren (20) benachbart einem Filterrohr (20) der zweiten Vielzahl von Filterrohren (20) angeordnet ist.

13. Verfahren nach Anspruch 11 oder 12, wobei das Bilden der ersten Filtereinheit (10) das Bilden einer Vielzahl von Öffnungen (40) an einer Oberfläche wenigstens eines Filterrohrs (20) der ersten Vielzahl von Filterrohren (20) umfasst.

14. Verfahren nach Anspruch 13, ferner umfassend das Anlegen eines Vakuums an ein Ende (60a, 60b) wenigstens eines der ersten Filterrohre (20), um Partikel über die Vielzahl von Öffnungen (40) zu diesem hinzuziehen, oder
Anlegen eines Überdrucks an das Ende (60a, 60b) wenigstens eines der ersten Vielzahl von Filterrohren (20), um Partikel durch die Vielzahl von Öffnungen (40) herauszuspülen.

15. Verfahren nach einem der Ansprüche 11 bis 14, wobei die erste Filtereinheit (10) als eine einzige spritzgegossene Einheit hergestellt wird.

## Revendications

1. Système de filtration pour éliminer des particules d'un flux d'un système d'échappement d'air comprenant :
une première unité de filtration (10) comprenant une première pluralité de tubes de filtration (20) ayant un premier axe longitudinal, dans lequel les tubes de filtration (20) de la première pluralité de tubes de filtration (20) sont espacés pour créer un ou plusieurs écartements entre les tubes de filtration (20) de la première pluralité de tubes de filtration (20) ;
dans lequel au moins l'un des tubes de filtration (20) de la première pluralité de tubes de filtration (20) est composé d'un matériau hydrophile capable de retenir un attractif de liquide ; et
dans lequel la première pluralité de tubes de filtration (20) est couverte au moins en partie par un attractif formulé pour entraîner des particules ;
**caractérisé en ce que** ledit au moins un de la première pluralité de tubes de filtration (20) est composé d'un matériau non absorbant et n'absorbe pas de liquide, de sorte que le tube de filtration (20) puisse être nettoyé par lavage et revêtu à nouveau d'un attractif.

2. Système de filtration selon la revendication 1, comprenant en outre :
une seconde unité de filtration (12) comprenant une seconde pluralité de tubes de filtration (20) ayant un second axe longitudinal, dans lequel les tubes de filtration (20) de la seconde pluralité de tubes de filtration (20) sont espacés pour créer un ou plusieurs écartements entre les tubes de filtration (20) de la seconde pluralité de tubes de filtration (20) ;
dans lequel la seconde unité de filtration (12) est disposée adjacente à la première unité de filtration (10) ; et
dans lequel la première pluralité de tubes de filtration (20) est décalée latéralement par rapport à la seconde pluralité de tubes de filtration (20) de sorte qu'au moins un écartement entre des tubes de filtration (20) de la première pluralité de tubes de filtration (20) soit adjacent à un tube de filtration (20) de la seconde pluralité de tubes de filtration (20).

3. Système de filtration selon la revendication 1 ou 2, dans lequel l'au moins un de la première pluralité de tubes de filtration (20) comprend une pluralité d'ouvertures (40) sur sa surface pour augmenter ainsi la superficie disponible pour une couverture par l'attractif.

4. Système de filtration selon la revendication 2 ou 3, dans lequel les première et seconde unités de filtration (10, 12) sont jointes pour former un ensemble de filtration.

5. Système de filtration selon l'une quelconque des revendications 1 à 4, dans lequel la première unité de filtration (10) est produite sous forme d'unité unique moulée par injection.

6. Système de filtration selon l'une quelconque des revendications 1 à 5, dans lequel au moins l'un de la première pluralité de tubes de filtration (20) est creux et inclut un raccordement pour fournir un vide pour en retirer l'air ou pour fournir un écoulement d'air positif à au moins l'un de la première pluralité de tubes de filtration (20) pour purger des particules de l'au moins un tube de filtration (20).

7. Système de filtration selon l'une quelconque des revendications 1 à 6, dans lequel une superficie d'un tube de filtration (20) de la première pluralité de tubes de filtration (20) dans un plan perpendiculaire à une direction d'écoulement d'air (50) à travers l'unité de filtration (10) est supérieure à une superficie d'un écartement entre deux tubes de filtration (20) de la première pluralité de tubes de filtration (20) dans un plan perpendiculaire à la direction d'écoulement d'air (50) à travers le filtre.

8. Système de filtration selon l'une quelconque des revendications 2 à 7, comprenant en outre :
un raccord disposé sur la première unité de filtration (10) ; et
un récepteur disposé sur la seconde unité de filtration (12) ;
dans lequel le raccord et le récepteur sont configurés pour se raccorder afin de joindre la première unité de filtration (10) et la seconde unité de filtration.

9. Système de filtration selon l'une quelconque des revendications 1 à 8, dans lequel au moins l'un de la première pluralité de tubes de filtration (20) est composé d'un matériau sensiblement rigide.

10. Système de filtration selon l'une quelconque des revendications 2 à 9, dans lequel lesdites première et seconde pluralités de tubes de filtration (20) sont décalées latéralement l'une par rapport à l'autre de sorte que des écartements entre les tubes de filtration (20) de la première pluralité de tubes de filtration (20) soient bloqués par des tubes de filtration (20) de la seconde pluralité de tubes de filtration (20) dans une vue dans une direction dans laquelle l'air s'écoule (50) à travers le système de filtration.

11. Procédé de fabrication d'un système de filtration d'air, le procédé comprenant :
la formation d'une première unité de filtration (10) à l'aide d'un matériau non absorbant hydrophile, ladite première unité de filtration (10) comprenant une première pluralité de tubes de filtration (20) configurés dans une relation côte à côte généralement parallèle avec des écartements entre lesdits tubes de filtration (20) de ladite première pluralité de tubes de filtration (20) ; et
le revêtement d'au moins une portion de ladite première pluralité de tubes de filtration (20) dans un attractif de particule liquide, ledit attractif ayant une affinité pour ledit matériau hydrophile ;
dans lequel ledit matériau hydrophile est capable de retenir ledit attractif de particule liquide ;
dans lequel les tubes de filtration (20) n'absorbent pas de liquide, de sorte que le tube de filtration (20) puisse être nettoyé par lavage et revêtu à nouveau d'un attractif.

12. Procédé selon la revendication 11, comprenant en outre :
la formation d'une seconde unité de filtration (12) à l'aide d'un matériau hydrophile, ladite seconde unité de filtration (12) comprenant une seconde pluralité de tubes de filtration (20) configurés dans une relation côte à côte généralement parallèle avec des écartements entre lesdits tubes de filtration (20) de ladite seconde pluralité de tubes de filtration (20) ; et
la disposition de la seconde unité de filtration (12) adjacente à la première unité de filtration (10) de sorte que la première pluralité de tubes de filtration (20) soit décalée latéralement par rapport à la seconde pluralité de tubes de filtration (20) de sorte qu'au moins un écartement entre des tubes de filtration (20) de la première pluralité de tubes de filtration (20) soit adjacent à un tube de filtration (20) de la seconde pluralité de tubes de filtration (20).

13. Procédé selon la revendication 11 ou 12, dans lequel la formation de la première unité de filtration (10) comprend la formation d'une pluralité d'ouvertures (40) sur une surface d'au moins un tube de filtration (20) de la première pluralité de tubes de filtration (20).

14. Procédé selon la revendication 13, comprenant en outre l'application d'un vide à une extrémité (60a, 60b) d'au moins l'un de la première pluralité de tubes de filtration (20) pour attirer des particules vers celle-ci via ladite pluralité d'ouvertures (40), ou
l'application d'une pression positive à l'extrémité (60a, 60b) d'au moins l'un de la première pluralité de tubes de filtration (20) pour purger des particules depuis ladite pluralité d'ouvertures (40).

15. Procédé selon l'une quelconque des revendications 11 à 14, dans lequel la première unité de filtration (10) est produite sous forme d'unité unique moulée par injection.
